# EUROPÄISCHE PATENTANMELDUNG

(11) **EP 1 674 235 A1**
(43) Veröffentlichungstag der Anmeldung: **28.06.2006**
(21) Anmeldenummer: 05013303.2
(22) Anmeldetag: 21.06.2005
(51) Int. Cl.: B29C 45/44

(54) **Vorrichtung zum Spritzgiessen eines Formteils mit Hinterschnitt**

(30) Priorität: 17.12.2004 DE 102004060964
(71) Anmelder: REHAU AG + Co, 95111 Rehau (DE)
(72) Erfinder: Kluge, Christian, 09517 Zöblitz (DE)

(57) **Zusammenfassung**

Die Erfindung betrifft eine Vorrichtung (10) zum Spritzgießen eines Formteils (1) mit Hinterschnitt, mit zumindest einem formgebenden Werkzeugelement (11), das einen Vorsprung zum Formen des Hinterschnitts umfasst, wobei das formgebende Werkzeugelement (11) in der Vorrichtung (10) vorzugsweise zum Freistellen des Formteils (1) bewegbar ist. Um herkömmliche, gattungsgemäße Vorrichtungen zu verbessem und um im Speziellen eine Vorrichtung bereitzustellen, mit der das Formteil im Wesentlichen deformationsfrei freigestellt werden kann, ist erfindungsgemäß vorgesehen, dass das formgebende Werkzeugelement (11) schwenkbar ist.

## Beschreibung

Die Erfindung betrifft eine Vorrichtung zum Spritzgießen eines Formteils mit Hinterschnitt, mit zumindest einem formgebenden Werkzeugelement, das einen Vorsprung zum Formen des Hinterschnitts umfasst, wobei das formgebende Werkzeugelement in der Vorrichtung vorzugsweise zum Freistellen des Formteils bewegbar ist.

Hinterschnitte werden mittels Schrägschieber, Schrägbolzen, etc. in mechanisch geradlinigen Bewegungen von Werkzeugteilen freigestellt. Hinterschnitte mit Konturen, die eine Kurve beschreiben, lassen sich im Allgemeinen ohne Deformation des Formteils nicht entformen.

Bei klein- und großflächigen Formteilen lassen sich Hinterschnitte nur begrenzt freistellen und eine deformationsfreie Entformung ist prinzipiell nicht möglich. Die Werkzeugelemente müssen im Spritzzustand großflächig aufliegen, um den hohen Spritzdrücken von z.B. 500 bis 1000 bar standzuhalten. Das Freistellen der Hinterschnitte erfordert Werkzeug- und Formteilfreiraum, der in vielen Fällen nicht vorhanden ist. Nur mit angepassten Formteilkonstruktionen, die wiederum die Design-Freiheit und die Formteilstabilität deutlich einschränken, sind Spritzgussteile zu fertigen. Deformationen oder Oberflächenbeschädigungen bei der Entformung sind trotzdem in vielen Fällen nicht zu vermeiden. Bei vergleichbaren Fertigungsverfahren trifft dieses im gleichen Ausmaß zu, z.B. beim Tiefziehen, Pressen, Sinterformen, Metalldruckguss u.a.

Im Lichte dessen liegt der Erfindung die Aufgabe zugrunde, die bekannten Nachteile herkömmlicher Vorrichtungen zum Spritzgießen von Formteilen mit Hinterschnitten zu beseitigen und eine verbesserte, gattungsgemäße Vorrichtung bereitzustellen, die eine im Wesentlichen deformationsfreie Entformung bzw. ein deformationsfreies Freistellen der Formteile ermöglicht.

Um diese Aufgabe zu lösen stellt die Erfindung eine gattungsgemäße Vorrichtung zum Spritzgießen eines Formteils mit Hinterschnitt bereit, bei der das formgebende Werkzeugelement zusätzlich schwenkbar ist. Dadurch kann der vorhandene Werkzeug- und Formteilfreiraum optimal ausgenutzt werden, mit dem Vorteil, dass auch besonders großflächige Formteile im Wesentlichen ohne Deformationen oder Oberflächenbeschädigungen hergestellt und freigestellt werden können. Durch entsprechende konstruktive Auslegung des formgebenden Werkzeugelements kann der Bewegungsablauf zum Freistellen des spritzgegossenen Formteils optimal auf die Geometrie des fertigen Formteils abgestimmt werden. Überdies eröffnet die erfindungsgemäße Vorrichtung neue Möglichkeiten bei der Gestaltung und Konstruktion von Spritzgussformteilen, die mit den herkömmlichen Spritzgießvorrichtungen nicht deformationsfrei freigestellt werden können.

In einer bevorzugten Ausführungsform der Erfindung ist das formgebende Werkzeugelement Teil eines Schiebers. So ist das formgebende Werkzeugelement gleichzeitig als Auswerfer zum Auswerfen des Formteils aus der Spritzgussform nach Beendigung des Spritzgießvorgangs verwendbar.

Vorzugsweise ist der Schieber zum Freistellen des Formteils translatorisch bewegbar. So kann das formgebende Werkzeugelement beispielsweise an eine translatorisch verstellbare Schubstange angeschlossen werden und kann gleichzeitig zu der translatorischen Bewegung eine Schwenkbewegung ausführen. Damit wird die Bewegungsfreiheit des formgebenden Werkzeugelements weiter verbessert, wodurch dann auch komplexe und anspruchsvolle Formteilkonstruktionen mit der verbesserten Ausführung der erfindungsgemäßen Vorrichtung herstellbar sind.

Mit einem besonders einfachen Mechanismus lässt sich eine vielseitig anwendbare Ausführung der erfindungsgemäßen Vorrichtung verwirklichen, bei der eine Schwenkachse, um die das formgebende Werkzeugelement schwenkbar ist, im Wesentlichen senkrecht zu einer Führungsrichtung verläuft, entlang der das formgebende Werkzeugelement zum Freistellen des Formteils bewegbar ist. Diese Vorrichtung ist besonders für stark gekrümmte Formteile mit Hinterschnitt geeignet.

Besonders anspruchsvolle und schwer freizustellende Formteilkonstruktionen können mit einer verbesserten Ausführung der erfindungsgemäßen Vorrichtung hergestellt und im Wesentlichen deformationsfrei freigestellt werden, bei der das formgebende Werkzeugelement zumindest zwei Formabschnitte zum Formen zweier den Hinterschnitt bildenden Formflächen des Formteils umfasst.

Das schwenkbare, formgebende Werkzeugelement ist besonders vorteilhaft einsetzbar, wenn der erste Formabschnitt eine Krümmung aufweist. Der gekrümmte, erste Formabschnitt formt dabei die gekrümmte, erste Formfläche, die den verfügbaren Werkzeug- und Formteilfreiraum zum Entformen des Formteils stark einschränkt. Der Bewegungsablauf des formgebenden Werkzeugelements ist durch geschickte, konstruktive Gestaltung der Werkzeugelemente aber gerade bei einem durch die gekrümmte Formfläche stark eingeschränkten Werkzeug- und Formteilfreiraum so steuerbar, dass das Formteil besonders materialschonend freigestellt werden kann.

Zur Herstellung von besonders schwierig freizustellenden Formteilen empfiehlt sich eine bevorzugte Ausführungsform der erfindungsgemäßen Vorrichtung, bei welcher der erste und der zweite Formabschnitt an der Spitze des Vorsprungs des formgebenden Werkzeugelements im Wesentlichen in einem spitzen Winkel aufeinander treffen.

Der Bewegungsablauf des formgebenden Werkzeugelements zum Freistellen des spritzgegossenen Formteils ist durch konstruktive Auslegung der Werkzeugelemente aufgrund der geometrischen Gegebenheiten besonders einfach festlegbar und umsetzbar, wenn die Krümmung des ersten Formabschnitts einen mit zunehmendem Abstand von der Spitze des Vorsprungs größer werdenden Krümmungsradius aufweist.

Um gekrümmte Formteile mit Hinterschnitt herstellen und im Wesentlichen deformationsfrei von formgebenden Werkzeugelementen freistellen zu können, erweist es sich als besonders hilfreich, wenn der Abstand zwischen einem beliebigen Punkt auf dem ersten Formabschnitt und der Schwenkachse in etwa dem Krümmungsradius des ersten Formabschnitts im Bereich des Punktes entspricht.

Weil das formgebende Werkzeugelement während des Spritzgießens extremen Drücken ausgesetzt ist und eine große Gefahr besteht, dass sich das bewegbare Werkzeugelement in der Vorrichtung unter der hohen Belastung verschiebt, ist es vorteilhaft, wenn die Vorrichtung eine Rastvorrichtung umfasst, um das formgebende Werkzeugelement während des Spritzgießens in einer verrasteten Position zu halten.

Eine besonders bevorzugte Ausführungsform der erfindungsgemäßen Vorrichtung umfasst eine Auswerfeinrichtung, um das formgebende Werkzeugelement translatorisch entlang der Führungsrichtung zu bewegen und in einem zur translatorischen Bewegung gekoppelten Verhältnis um die Schwenkachse zu schwenken. So kann durch konstruktive Auslegung der Werkzeugelemente ein bestimmter Bewegungsablauf des formgebenden Werkzeugelements vorgegeben werden, der aufgrund der festgelegten Kopplung der Schwenkbewegung an die translatorische Bewegung beliebig oft und präzise wiederholbar ist, um beispielsweise auch große Stückzahlen des zu fertigenden Formteils in einem vollautomatisierten Verfahren schnell und wirtschaftlich herstellen zu können.

Die Vorteile und die wesentlichen Merkmale der Erfindung werden nachstehend mit Bezug auf die beiliegenden Zeichnungen beschrieben.

### Kurze Beschreibung der Zeichnungen

- Fig. 1a: zeigt eine Gesamtansicht eines mit der erfindungsgemäßen Vorrichtung hergestellten Spritzgussformteils mit einem Hinterschnitt.
- Fig. 1b: zeigt eine vergrößerte Ansicht eines Randbereichs des Formteils mit Hinterschnitt aus Fig. 1 a im Querschnitt.
- Fig. 2a: zeigt eine Schnittansicht der erfindungsgemäßen Vorrichtung im Spritzzustand.
- Fig. 2b: zeigt eine Schnittansicht der erfindungsgemäßen Vorrichtung beim Entformen und Freistellen des Formteils in einer Position, in der die Schwenkbewegung des formgebenden Werkzeugs einsetzt.
- Fig. 2c: zeigt eine Schnittansicht der erfindungsgemäßen Vorrichtung beim Auswerfen des Formteils am Ende der Schwenkbewegung des formgebenden Werkzeugs am tiefsten Punkt.

### Detaillierte Beschreibung der Zeichnungen

In der nachfolgenden Beschreibung werden positionsangebende Begriffe wie "oben", "unten", "rechts", "links", etc. verwendet. Diese Begriffe sind lediglich in Bezug auf die jeweilige Zeichnung zu verstehen und haben keinen beschränkenden Charakter.

Fig. 1a zeigt ein Beispiel eines mit der erfindungsgemäßen Vorrichtung 10 herstellbaren Formteils 1 in einer Gesamtansicht.

Das Formteil 1 umfasst einen länglichen, gewölbten Körper und beschreibt in etwa die Form einer Rinne mit einem stufenförmigen Fortsatz 4 am linken Rand und einer abgewinkelten Kante 5 am rechten Rand. Der stufenförmige Fortsatz 4 und die Kante 5 erstrecken sich an den linken und rechten Längsrändern des Formteils 1 in Längsrichtung im Wesentlichen über dessen gesamte Länge. Die konkav gewölbte Oberfläche auf der Innenseite des Formteils 1 wird nachstehend als erste Formfläche 2 bezeichnet. Die durch eine gestrichelte Linie symbolisch getrennten Oberflächenbereiche 2a und 2b werden von unterschiedlichen, formgebenden Werkzeugelementen 12 bzw. 32 geformt, wie weiter unten genauer beschrieben wird. Die Unterseite des stufenförmigen Fortsatzes 4, die nachstehend als zweite Formfläche 3 bezeichnet wird, schließt sich im Wesentlichen im spitzen Winkel an die erste Formfläche 2 an. Zusammen mit der ersten Formfläche 2 bildet die zweite Formfläche 3 den Hinterschnitt des Formteils 1.

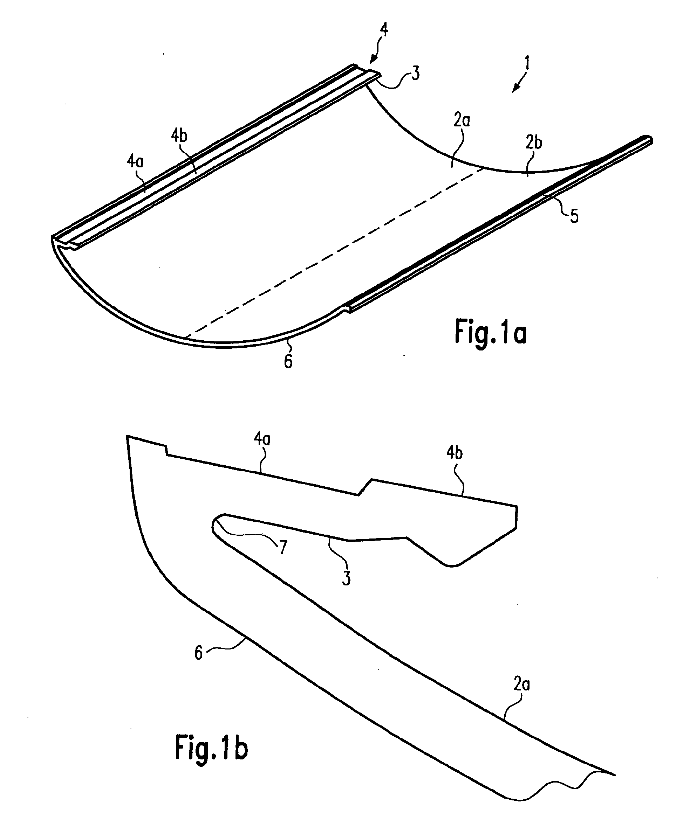

Fig. 1 b zeigt eine vergrößerte Ansicht des linken Randbereichs des Spritzgussformteils 1 aus Fig. 1 a. Die zweite Formfläche 3 weist im Querschnitt ein im Wesentlichen gezacktes bzw. gewelltes Oberflächenprofil auf und steht der ersten Formfläche 2 bzw. 2a im Wesentlichen gegenüber. Die erste Kontaktfläche 2 sowie die zweite Kontaktfläche 3 gehen im Bereich einer stark gekrümmten Kehle, die als Kontaktstelle 7 bezeichnet wird, ineinander über bzw. erstrecken sich von dieser Kontaktstelle 7 ausgehend in etwa in einem spitzen Winkel. An der Oberseite des stufenförmigen Fortsatzes 4 ist ein erster flächiger Abschnitt 4a aus der Ebene eines zweiten flächigen Abschnitts 4b herabgesetzt.

Die konvex gewölbte Unterseite des Spritzgussformteils 1 wird nachstehend als dritte Formfläche 6 bezeichnet. Der Krümmungsradius der konkav gewölbten, ersten Formfläche 2 nimmt mit wachsendem Abstand von der Kontaktstelle 7 zu.

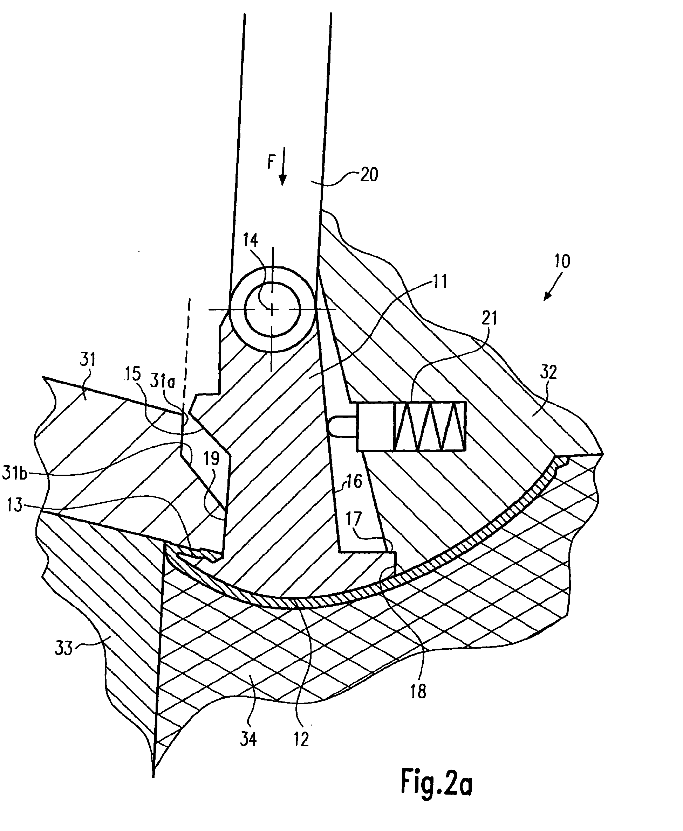

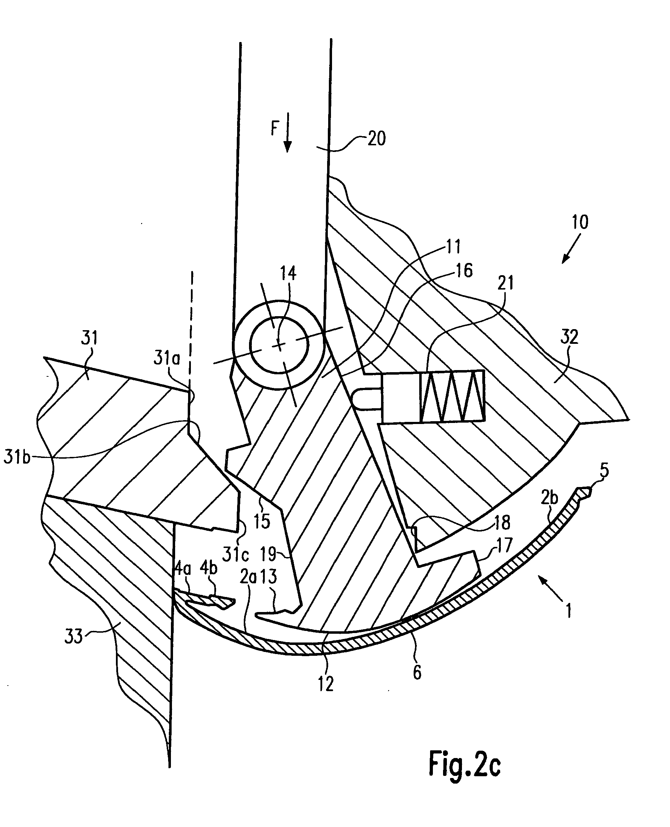

Fig. 2a zeigt eine Schnittansicht der erfindungsgemäßen Vorrichtung 10 zum Spritzgießen des Formteils 1 mit dem von den ersten und zweiten Formflächen 2 und 3 gebildeten Hinterschnitt. Die Vorrichtung 10 umfasst ein formgebendes Werkzeugelement 11, das einen Vorsprung zum Formen des Hinterschnitts umfasst. Das formgebende Werkzeugelement 11 ist am unteren Ende einer in einer Führungsrichtung F translatorisch bewegbaren bzw. verstellbaren Führungsstange 20 gelenkig angeschlossen und über die Schwenkachse 14 senkrecht zur Führungsrichtung F schwenkbar. In der erfindungsgemäßen Vorrichtung 10 ist eine Spritzgussform zum Spritzgießen des Formteils 1 ausgebildet, im Wesentlichen bestehend aus einem ersten oberen Formwerkzeug 31, einem zweiten oberen Formwerkzeug 32, einem seitlichen Formwerkzeug 33, einem bewegbaren, unteren Formwerkzeug 34 und dem nachstehend als Schwenkabschnitt 11 bezeichneten schwenkbaren, formgebenden Werkzeugelement 11. Der Schwenkabschnitt 11 und die Schubstange 20 sind Teile eines sogenannten Schwenkschiebers, der eine Auswerfeinrichtung darstellt, mit der das formgebende Werkzeugelement d.h. der Schwenkabschnitt 11 zum Auswerfen und Freistellen des Formteils 1 aus der Vorrichtung 10 translatorisch entlang der Führungsrichtung F bewegt wird und in einem zur translatorischen Bewegung gekoppelten Verhältnis um eine Schwenkachse 14 geschwenkt wird. In dem in Fig. 2a gezeigten Zustand, der nachstehend auch als Spritzzustand bezeichnet wird, befindet sich der Schwenkschieber in der obersten Stellung in der Vorrichtung 10.

Der Schwenkabschnitt 11 weist in der Schnittansicht der Fig. 2a bis 2c in etwa die Gestalt eines Ankers auf und umfasst auf der linken Seite einen zum ersten oberen Formwerkzeug 31 hervorstehenden Abschnitt mit einer Schrägfläche 15 an der linken, unteren Seite, die zur Auslenkung und Überführung des Schwenkabschnitts 11 von einer translatorischen Bewegung in eine rotatorische Bewegung im Wechselspiel mit einer Auslenkfläche 31 b des ersten oberen Formwerkzeugs 31 vorgesehen ist. Ferner umfasst der Schwenkabschnitt 11 eine Anlage- bzw. Anschlagfläche 19, um im Spritzzustand an einer Anlagefläche 31c des ersten oberen Formwerkzeugs 31 anzuliegen, einen durch erste und zweite Formabschnitte 12 und 13 gebildeten Vorsprung zum Formen der ersten und zweiten - den Hinterschnitt bildenden - Formflächen 2 und 3 des Formteils 1, einen Rastabschnitt 17, der in einem Aufnahmeabschnitt 18 des zweiten oberen Formwerkzeugs 32 im Spritzzustand in einer verrasteten Position aufgenommen wird, und eine Kontaktfläche 16, an der ein Kopf einer Rückstellfedereinrichtung 21 unter der Vorspannung einer Feder anliegt, um den Schwenkabschnitt 11 auf die Seite des ersten oberen Formwerkzeugs 31 gegen die Anlagefläche 31 c zu drücken. Der erste Formabschnitt 12 zum Formen des Bereichs 2a der ersten Formfläche 2 des Formteils 1 befindet sich an der Unterseite des Schwenkabschnitts 11. Die ersten und zweiten Formabschnitte 12, 13 treffen an der Spitze des Vorsprungs in einem spitzen Winkel aufeinander und bilden zusammen den Vorsprung des Schwenkabschnitts 11 zum Formen des Hinterschnitts des Formteils 1. Die Formabschnitte 12 und 13 sind entsprechend profiliert, um den ersten und zweiten Formflächen 2 und 3 des Formteils 1 die in Fig. 1 a und 1b dargestellten Profile zu verleihen, und um den Hinterschnitt zu bilden. Der erste Formabschnitt 12, der die konvex gewölbte Unterseite des Schwenkabschnitts 11 bildet, weist mit wachsendem Abstand von der Spitze des Vorsprungs einen zunehmenden Krümmungsradius auf. An der Spitze des Vorsprungs ist der Abstand des ersten Formabschnitts 12 zur Schwenkachse 14 am kleinsten. Näherungsweise entspricht der Abstand zwischen einem beliebigen Punkt auf dem ersten Formabschnitt 12 und der Schwenkachse 14 in etwa dem Krümmungsradius des ersten Formabschnitts 12 im Bereich des Punktes.

Das erste obere Formwerkzeug 31 umfasst eine Führungsfläche 31 a, die sich im Wesentlichen parallel zur Führungsrichtung F erstreckt. Der zum ersten oberen Formwerkzeug 31 vorstehende Abschnitt des Schrägschiebers 11 kann während der translatorischen Bewegung des Schrägschiebers 11 an der Führungsfläche 31 a entlang gleiten und wird dabei geführt. Unterhalb der Führungsfläche 31 schließt sich die schräg zur Führungsrichtung F zur Seite des Schrägabschnitts 11 nach unten verlaufende Schrägfläche 31 b an, die als Auslenkfläche für den mit der Schrägfläche 15 versehenen, auszulenkenden Abschnitt des Schrägschiebers 11 vorgesehen ist. Am unteren Ende geht die Auslenkfläche 31 b in eine sich ebenfalls parallel zur Führungsrichtung F erstreckende Anlagefläche 31c über, die dafür vorgesehen ist, die Anlagefläche 19 des um die Schwenkachse 14 schwenkbaren Schwenkabschnitts 11 im Spritzzustand abzustützen. An einer Unterseite besitzt das erste untere Formwerkzeug 31 entsprechende formgebende Abschnitte, um die stufenförmig angeordneten ersten und zweiten Flächen 4a und 4b an der Oberseite des Fortsatzes 4 des Spritzgussformteils 1 zu formen.

Das seitliche Formwerkzeug 33 umfasst eine sich im Wesentlichen parallel zur Führungsrichtung F erstreckende Anlagefläche, um den Randbereich des Formteils 1 mit Fortsatz 4 während des Auswerfvorgangs des Formteils 1 zu führen.

Das untere Formwerkzeug 34 umfasst einen formgebenden Abschnitt um die konvex gewölbte, dritte Formfläche 6 an der Unterseite des Formteils 1 zu formen und ist zum Entformen und Freistellen des Formteils 1 in der Vorrichtung verstellbar.

Das zweite obere Formwerkzeug 32 umfasst an der Unterseite einen formgebenden Abschnitt zum Formen des Bereichs 2b der ersten Formfläche 2 auf der Ober- bzw. Innenseite des Formteils 1. Am linken unteren Ende des zweiten oberen Formwerkzeugs 32 ist zusätzlich ein Aufnahmeabschnitt 18 vorgesehen, um einen Rastabschnitt des Schwenkabschnitts 11 im Spritzzustand in verrasteter Stellung formschlüssig aufzunehmen, so dass der erste Formabschnitt 12 an der Unterseite des Schwenkabschnitts 11 und der formgebende Abschnitt für den Bereich 2b des Formteils 1 an der Unterseite des zweiten oberen Formwerkzeugs 32 zueinander fluchten. Die Kontur des ersten Formabschnitts 12 mit dem in wachsendem Abstand von der Spitze des Vorsprungs des Schwenkabschnitts 11 zunehmenden Krümmungsradius wird auch in dem im Spritzzustand angrenzenden Bereich an der Unterseite des zweiten oberen Formwerkzeugs 32 fortgesetzt, der ausgehend von dem Aufnahmeabschnitt 18 nach rechts einen größeren Krümmungsradius aufweist. Zusammen bilden der Formabschnitt 12 und der formgebende Abschnitt an der Unterseite des zweiten oberen Formwerkzeugs 32 eine Form zum Formen der gesamten ersten Formfläche 2 des Formteils 1. Oberhalb des formgebenden Abschnitts für den Bereich 2b umfasst das zweite obere Formwerkzeug 32 eine Aufnahme für eine Federeinrichtung 21. Der Kopf der Federeinrichtung 21 wird durch die Federkraft z.B. einer Spiralfeder in Richtung des Schwenkabschnitts 11 gedrängt und in Anlage mit der Fläche 16 des Schwenkabschnitts 11 gebracht, um den Schwenkabschnitt 11 in Richtung des ersten oberen Formwerkzeugs 31 zu drängen, bis die Anlagefläche 19 des Schwenkabschnitts im Spritzzustand an der Anlagefläche 31 c des ersten oberen Formwerkzeugs 31 anliegt. Der Kopf der Federeinrichtung 21 kann an dem flächigen Anlageabschnitt 16 entlang gleiten.

Mit Bezug auf die Figuren 2a bis 2c wird nachstehend die bevorzugte Anwendung der erfindungsgemäßen Vorrichtung 10 beschrieben.

In der in Fig. 2a dargestellten Anordnung bilden der Schwenkabschnitt 11, das erste und zweite obere Formwerkzeug 31 und 32, das seitliche Formwerkzeug 33 und das untere Formwerkzeug 34 die Spritzgussform mit einem Hohlraum zur Aufnahme des Materials für das Formteil 1. Dazu sind sowohl das bewegbare untere Formwerkzeug 34 als auch der Schwenkschieber und insbesondere der schwenkbare Schwenkabschnitt 11 in die in Fig. 2a dargestellte Position gefahren. Der Schwenkabschnitt 11 befindet sich dann in der verrasteten Position, in welcher der Rastabschnitt 17 des Schwenkabschnitts 11 in dem Aufnahmeabschnitt 18 am linken unteren Rand des zweiten oberen Formwerkzeugs 32 formschlüssig aufgenommen wird, wobei die Anlagefläche 19 des Schwenkabschnitts 11 an der Anlagefläche 31c des ersten oberen Formwerkzeugs 31 bündig anliegt. Der erste Formabschnitt 12 an der konvex gewölbten Unterseite des Schwenkabschnitts 11 geht nahtlos bzw. ohne Spalt in den formgebenden Abschnitt für den Bereich 2b des Formteils 1 an der Unterseite des zweiten oberen Formwerkzeugs 32 über. Von den formgebenden Abschnitten des ersten oberen Formwerkzeugs 31, des seitlichen Formwerkzeugs 33 und des unteren Formwerkzeugs 34 ist die Spritzgussform zum Formen des Formteils 1 vollumfänglich geschlossen. Über einen Kanal (nicht gezeigt) wird das Material zum Formen des Formteils 1 unter extrem hohen Druck, beispielsweise 500 bis 1000 bar, in den Hohlraum der Spritzgussform eingespritzt, bis es die Spritzgussform vollständig ausfüllt. Dabei entsteht das Formteil 1 mit Hinterschnitt mit den ersten und zweiten, den Hinterschnitt bildenden Formflächen 2 und 3 und der dritten Formfläche 6 an der Unterseite.

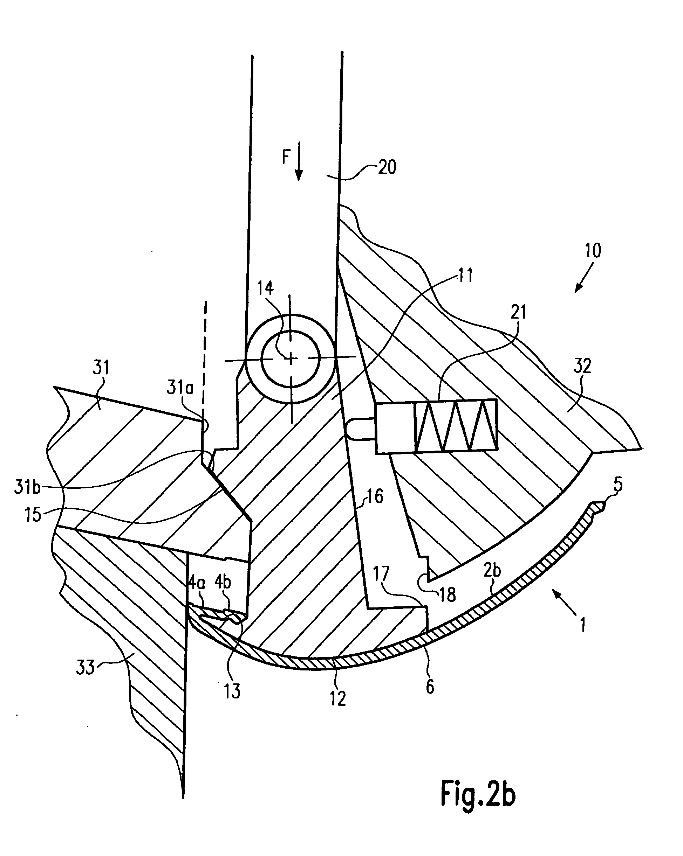

Nach dem Erkalten und Aushärten des Formteils 1 wird der Entformvorgang zum Auswerfen des Formteils 1 eingeleitet. Der Auswerfvorgang wird nachstehend mit Bezug auf die Fig. 2b und 2c beschrieben.

Zunächst wird das untere Formwerkzeug 34 aus seiner Position im Spritzzustand weggefahren und der Schwenkabschnitt 11 wird über die Führungsstange 20 in einer translatorischen Bewegung in Führungsrichtung F nach unten geschoben, bis die Schrägfläche 15 des Schwenkabschnitts an der dazu parallelen Auslenkfläche 31 b des ersten oberen Formwerkzeugs 31 anliegt. Dabei wird das Formteil 1 deformationsfrei von den formgebenden Abschnitten an den Unterseiten der ersten und zweiten oberen Formwerkzeuge 31 und 32 entfernt. Dieser Zustand ist in Fig. 2b gezeigt. Wenn die Führungsstange 20 ab dem in Fig. 2b gezeigten Zustand weiter in der Führungsrichtung F nach unten geschoben wird, gleitet die Schrägfläche 15 an der Auslenkfläche 31 b des ersten oberen Formwerkzeugs 31 entlang, so dass der Schwenkabschnitt 11 seitlich ausgelenkt wird und gegen den Uhrzeigersinn um die Schwenkachse 14 schwenkt. Die Schwenkbewegung des Schwenkabschnitts 11 um die Schwenkachse 14 ist entsprechend der Neigung der Schrägfläche 15 bzw. der Auslenkfläche 31 b zur Führungsrichtung F in einem festgelegten Verhältnis zur translatorischen Bewegung der Führungsstange 20 entlang der Führungsrichtung F gekoppelt. Durch die konstruktive Gestaltung der Auslenkfläche 31 b bzw. der Schrägfläche 15 ist der gesamte Bewegungsablauf des Schwenkabschnitts 11 vom Spritzzustand bis zur vollständig verschwenkten Position genau vorgegeben.

Bei einer Abwärtsbewegung der Stange 20 ausgehend von dem in Fig. 2b gezeigten Zustand wird der Schwenkabschnitt 11 vorzugsweise so geschwenkt, dass das Formteil 1 möglichst ohne Deformation freigestellt wird. Im vorliegenden Beispiel des gekrümmten Formteils 1 schränkt die konvex gewölbte, erste Formfläche 2 den vorhandenen Werkzeug- bzw. Formteilfreiraum zum Freistellen des Formteils 1 von formgebenden Werkzeugelementen erheblich ein. Weil der Krümmungsradius der ersten Formfläche 2 mit wachsendem Abstand von der Kontaktstelle 7 größer wird, kann der Schwenkabschnitt 11 zur Seite der größer werdenden Krümmungsradien ersten Formfläche 2 um die Schwenkachse 14 derart geschwenkt werden, dass das Formteil 1 unter optimaler Ausnutzung des vorhandenen Werkzeug- und Formteilfreiraums im Wesentlichen deformationsfrei entformt bzw. freigestellt wird.

Die Umwandlung der Bewegung des Schwenkabschnitts 11 beim Auswerfen des Formteils 1 erfolgt durch die entsprechende Gestaltung der Maschinenelemente mit zeitlicher, über den Entformungsweg definierter Verzögerung, um eine absolut materialschonende Entformung zu garantieren. Im Spritzzustand ist durch den Rastabschnitt 17 und den Aufnahmeabschnitt 18 eine prozesssichere Auflage des Schwenkabschnitts 11 gewährleistet. Raumformen lassen sich über eine entsprechende Segmentierung der formgebenden Werkzeugelemente 11, 31, 32, 33, 34 konstruktiv lösen.

Die Fertigung von großen Formteilen mit großen Hinterschnitten wird auch bei hohen O-berflächenanforderungen möglich. Insbesondere bei lackierten Formteilen eröffnet die Erfindung neuen Design- und Gestaltungsspielraum. Teile, die aus fertigungstechnischen Gründen bisher nicht zu realisieren waren, können mit der erfindungsgemäßen Spritzgießvorrichtung 10 hergestellt werden.

Weiterhin ist bei der erfindungsgemäßen Technik von Vorteil, dass der zurückzulegende Weg des Schwenkabschnitts zur Entformung des Hinterschnittes im Vergleich zu geradlinig verlagerbaren Schrägschiebem gemäß des Standes der Technik bedeutend kürzer ist. Dadurch resultieren Vorteile bei der Bauhöhe der Vorrichtung zum Spritzgießen und bei der Zykluszeit, die zur Herstellung eines Formteiles benötigt wird.
In entsprechender Relation ist die erfindungsgemäße Technik auch auf kleine Formteile übertragbar. Formteile mit Hinterschnitten und Konturen, die eine Kurve beschreiben, lassen sich im Allgemeinen beschädigungsfrei nur mit diesem Prinzip herstellen.

Die erfindungsgemäße Vorrichtung 10 eignet sich insbesondere für das Spritzgießen von Formteilen für die Automobilverkleidung, beispielsweise Stoßfängerverkleidungen, Schweller, Seitenschutzleisten, Spoiler, aber auch für Haushaltsgeräteteile, Bürogeräteteile oder Kommunikationsgeräte.

## Patentansprüche

1. Vorrichtung (10) zum Spritzgießen eines Formteils (1) mit Hinterschnitt, mit zumindest einem formgebenden Werkzeugelement (11), das einen Vorsprung zum Formen des Hinterschnitts umfasst, wobei das formgebende Werkzeugelement (11) in der Vorrichtung (10) vorzugsweise zum Freistellen des Formteils (1) bewegbar ist, **dadurch gekennzeichnet, dass** das formgebende Werkzeugelement (11) schwenkbar ist.

2. Vorrichtung (10) nach Anspruch 1, **dadurch gekennzeichnet, dass** das formgebende Werkzeugelement (11) Teil eines Schiebers (11, 20) ist.

3. Vorrichtung (10) nach Anspruch 2, **dadurch gekennzeichnet, dass** der Schieber (11, 20) zum Freistellen des Formteils (1) translatorisch bewegbar ist.

4. Vorrichtung (10) nach einem der vorangegangenen Ansprüche, **dadurch gekennzeichnet, dass** eine Schwenkachse (14), um die das formgebende Werkzeugelement (11) schwenkbar ist, im Wesentlichen senkrecht zu einer Führungsrichtung (F) verläuft, entlang der das formgebende Werkzeugelement (11) zum Freistellen des Formteils (1) bewegbar ist.

5. Vorrichtung (10) nach einem der vorangegangenen Ansprüche, **dadurch gekennzeichnet, dass** das formgebende Werkzeugelement (11) zumindest zwei Formabschnitte (12, 13) zum Formen zweier den Hinterschnitt bildenden Formflächen (2, 3) des Formteils (1) umfasst.

6. Vorrichtung (10) nach einem der vorangegangenen Ansprüche, **dadurch gekennzeichnet, dass** der erste Formabschnitt (13) eine Krümmung aufweist.

7. Vorrichtung (10) nach einem der vorangegangenen Ansprüche, **dadurch gekennzeichnet, dass** der erste und der zweite Formabschnitt (12, 13) an der Spitze des Vorsprungs des formgebenden Werkzeugelements (11) im Wesentlichen in einem spitzen Winkel aufeinander treffen.

8. Vorrichtung (10) nach einem der vorangegangenen Ansprüche, **dadurch gekennzeichnet, dass** die Krümmung des ersten Formabschnitts (12) einen mit zunehmendem Abstand von der Spitze des Vorsprungs größer werdenden Krümmungsradius aufweist.

9. Vorrichtung (10) nach einem der vorangegangenen Ansprüche, **dadurch gekennzeichnet, dass** der Abstand zwischen einem beliebigen Punkt auf dem ersten Formabschnitt (12) und der Schwenkachse (14) in etwa dem Krümmungsradius des ersten Formabschnitts (12) im Bereich des Punktes entspricht.

10. Vorrichtung (10) nach einem der vorangegangenen Ansprüche, **dadurch gekennzeichnet, dass** die Vorrichtung (10) eine Rastvorrichtung (17, 18) umfasst, um das formgebende Werkzeugelement (11) vorzugsweise während des Spritzgießens in einer verrasteten Position zu halten.

11. Vorrichtung (10) nach einem der vorangegangenen Ansprüche, **dadurch gekennzeichnet, dass** die Vorrichtung (10) eine Auswerfeinrichtung (11, 20) umfasst, um das formgebende Werkzeugelement (11) translatorisch entlang der ersten Führungsrichtung (F) zu bewegen und in einem zur translatorischen Bewegung gekoppelten Verhältnis um die Schwenkachse (14) zu schwenken.
